# EUROPÄISCHE PATENTSCHRIFT

(11) **EP 3 630 522 B1**
(45) Veröffentlichungstag und Bekanntmachung des Hinweises auf die Patenterteilung: **03.03.2021**
(21) Anmeldenummer: 18725520.3
(22) Anmeldetag: 18.05.2018
(51) Int. Cl.: B60K 35/00, B60K 37/06, G08B 13/196, G08B 25/10, G08C 17/02, G07C 5/08, H02J 9/00, B60R 25/102, B60R 25/30

(54) **EXTERNE DARSTELLUNG VON BILDAUFNAHMEN EINES FAHRZEUGINNENRAUMS IN EINER VR-BRILLE**
EXTERNAL DEPICTION OF PHOTOGRAPHS OF A VEHICLE INTERIOR IN VR GOGGLES
VISUALISATION EXTERNE D'IMAGES ACQUISES D'UN HABITACLE DE VÉHICULE DANS UN CASQUE DE RÉALITÉ VIRTUELLE

(30) Priorität: 24.05.2017 DE 102017208806
(43) Veröffentlichungstag der Anmeldung: 08.04.2020
(73) Patentinhaber: Audi AG, 85045 Ingolstadt (DE)
(72) Erfinder: MÜLLER, Tobias, 85114 Buxheim (DE)
(86) Internationale Anmeldenummer: PCT/EP2018/063070
(87) Internationale Veröffentlichungsnummer: WO 2018/215332

(56) Entgegenhaltungen:
- WO-A1-2014/072972
- CN-A- 105 151 001
- DE-A1-102010 010 179
- DE-A1-102015 004 749
- DE-A1-102015 011 815
- DE-U1- 29 819 117
- JP-A- 2009 075 756

## Beschreibung

Die vorliegende Erfindung betrifft ein Verfahren und ein System zur Darstellung von Bildaufnahmen eines Fahrzeuginnenraums in einer VR-Brille.

Vorrichtungen der erweiterten Realität bringen eine rechnerbasiert erzeugte Zusatzinformation in Überlagerung mit einer wahrnehmbaren und/oder aufgenommenen Umgebung. Im Bereich der visuellen Darstellung werden die Zusatzinformationen in dem Umgebungsbild eingeblendet bzw. lagerichtig ergänzt. Dies kann beispielsweise durch eine Datenbrille geschehen, bei der ein Nutzer weiterhin seine Umgebung im Blickfeld hat. Demgegenüber wird bei der virtuellen Realität ein Benutzer von seiner aktuellen Umgebung entkoppelt. Eine visuelle Vorrichtung hierzu kann beispielsweise aus einer VR-Brille (Virtual Reality: VR) bestehen, die den Nutzer reale oder künstlich erzeugte Bilder wahrnehmen lässt, die nicht seiner tatsächlichen physischen Umgebung entstammen müssen. Mittels Methoden der Bewegungserfassung, beispielsweise des Kopfes und/oder der Augen, können dann die in einer visuellen Ausgabeeinheit dargestellten Bildinformationen beeinflusst werden.

Aus der Druckschrift DE 10 2013 016 245 A1 ist ein Verfahren und eine Vorrichtung zur Erkennung und Ausgabe von realen, nicht sichtbaren Objekten einer Umgebung bekannt. An für das menschliche Auge nicht erkennbaren Objekten befindet sich eine jeweilige Markierung, die anhand von reflektiertem Licht im nicht sichtbaren Wellenlängenbereich durch eine Kamera detektiert werden kann und eine Identifizierung des jeweiligen Objekts ermöglicht. Eine Verarbeitungseinheit erzeugt für das identifizierte Objekt eine Zusatzinformation, die in das Ausgabebild, gegebenenfalls dargestellt in einer Datenbrille, eingeblendet wird.

In der Druckschrift DE 10 2013 019 563 A1 wird ein Verfahren zum Bereitstellen von Informationen über eine Umgebung an einem Smart-Gerät, beispielsweise einer Datenbrille, offenbart. Ein im Fahrzeug installiertes Erkennungssystem registriert eine Anwesenheit des Smart-Geräts und bietet seinem Nutzer Informationen über die Umgebung an. Die Umgebung befindet sich dabei in der Nähe des Nutzers des Smart-Geräts und kann einen Fahrzeuginnenraum umfassen.

Die Druckschrift DE 10 2014 013 961 A1 offenbart eine Virtual-Reality-Brille, bei der ein zusätzlich eingebautes Gebläse dem Nutzer der Brille ein möglichst realitätsnahes Fahrerlebnis vermitteln soll, falls der Nutzer in einer virtuellen Umgebung einer Luftströmung, beispielsweise einem Fahrtwind, ausgesetzt ist. Im Wesentlichen dient die Virtual-Reality-Brille dabei der Darstellung der Umgebung eines sich in einem virtuellen Fahrzeug befindlichen Fahrers, insbesondere also auch eines virtuellen Fahrzeuginnenraums Weiterer Stand der Technik ist aus der CN 105 151 001 A bekannt.

Den ersten beiden genannten Druckschriften ist gemeinsam, dass sich der Nutzer, um Informationen über den Innenraum des Fahrzeugs zu erhalten, im Fahrzeug, oder zumindest in der Nähe befinden muss. Bei der zuletzt voranstehend genannten Druckschrift wird nur ein virtueller, nicht aber ein aktueller, realer Fahrzeuginnenraum gezeigt.

Vor diesem Hintergrund ist es eine Aufgabe der vorliegenden Erfindung, ein Verfahren bereitzustellen, das eine externe Darstellung des Fahrzeuginnenraums innerhalb einer virtuellen Realität ermöglicht. Ferner ist es eine Aufgabe der vorliegenden Erfindung, ein entsprechendes System zur Durchführung eines solchen Verfahrens zur Verfügung zu stellen.

Zur Lösung der voranstehenden Aufgabe wird ein Verfahren zur Darstellung mindestens eines Bildes eines Fahrzeuginnenraums vorgeschlagen, bei dem mittels mindestens einer im Fahrzeug vorhandenen Kamera mindestens ein Bild des Fahrzeuginnenraums aufgenommen wird, fahrzeugbezogen gekennzeichnete Bilddaten des mindestens einen Bildes an einen externen Server übermittelt werden, einem gegenüber dem externen Server als für die fahrzeugbezogen gekennzeichneten Bilddaten autorisierten Nutzer Zugriff auf die Bilddaten gewährt wird, und die Bilddaten dem Nutzer mittels einer VR-Brille als Bild angezeigt werden. Vorteilhaft sind mehrere Kameras im Fahrzeug, insbesondere im Fahrzeuginnenraum angeordnet und vorteilhafterweise so positioniert, dass ggfs. eine 360° Rundumsicht des Fahrzeuginnenraums ermöglicht wird. Insbesondere ist es von Vorteil, wenn ausreichend Kameras im Fahrzeug vorhanden sind, um sowohl Sitz- wie Fußbereich erfassen zu können.

In einer Ausführungsform des erfindungsgemäßen Verfahrens wird das mindestens eine Bild des Fahrzeuginnenraums durch mindestens eine im Fahrzeug unsichtbar verbaute Kamera aufgenommen. Es ist denkbar, dass die mindestens ein Kamera in einem Bauteil einer Fahrzeuginnenraumausstattung, ggfs. unauffällig oder unsichtbar, d. h. verdeckt, integriert wird.

Um möglichst viel von der Umgebung zu erfassen, ist es vorteilhaft als Objektiv der mindestens einen Kamera ein Fischaugenobjektiv bzw. jedwede mögliche Realisierung eines Weitwinkelobjektivs einzusetzen. Dadurch bedingte optische Verzerrungen lassen sich für eine spätere Betrachtung des aufgenommenen Bildes durch numerische Methoden herausrechnen oder korrigieren. Dazu ist eine Recheneinheit vorzusehen, die entweder im Fahrzeug angeordnet ist und in kommunikativer Verbindung mit dem externen Server steht oder alternativ dazu in diesen integriert ist. Erfindungsgemäß wird aus mindestens zwei Bildern, die von mindestens zwei an zwei verschiedenen Positionen vorhandenen Kameras aufgenommen sind, ein fusioniertes Bild des Fahrzeuginnenraums errechnet. Eine Berechnung des fusionierten Bildes kann dabei durch eine im Fahrzeug vorhandene Recheneinheit erfolgen. Dabei kann es sich in Ausgestaltung um die gleiche Recheneinheit handeln, die voranstehend bereits erwähnt wurde. Es ist vorteilhaft, die von dem Fahrzeuginnenraum erhaltenen Bilder bzw. Bilddaten, welche, dem erfindungsgemäßen Verfahren folgend, mittels einer im Fahrzeug vorhandenen Kommunikationseinheit an einen externen Server übermittelt werden, zu komprimieren. Hierzu können bekannte numerische Verfahren zur Bilddatenkompression herangezogen werden, die auf einer ebenfalls im Fahrzeug vorhandenen Recheneinheit ausgeführt werden. Auf dem externen Server können die empfangenen und fahrzeugbezogen gekennzeichneten Bilddaten zu einer Weiterverarbeitung wieder dekomprimiert werden. Die in dem Fahrzeug angeordneten voranstehend erwähnten Recheneinheiten können durch eine Recheneinheit realisiert werden, die dazu ausgelegt ist, die voranstehend genannten Rechenoperationen auszuführen.

Entsprechend der Erfindung werden numerische Methoden zu einer Erkennung mindestens eines Objekts auf die auf dem externen Server gespeicherten Bilddaten angewendet. Bekannte Verfahren der Mustererkennung und/oder der Kantendetektion dienen dabei der Identifizierung von sich in dem Fahrzeuginnenraum befindlichen Gegenständen. Dies kann auch durch einen Bildabgleich mit einer Aufnahme eines unberührten, d.h. fabrikneuen Fahrzeuginnenraums unterstützt werden.

In Erweiterung dieser Ausführungsform des erfindungsgemäßen Verfahrens wird das mindestens eine zu erkennende Objekt in einer Liste, bspw. bestehend aus Geldbörse, Schlüsselbund, Smart-Gerät, Sonnenbrille, Handtasche und Handschuhe, vorgegeben. Diese Liste ist beliebig, ggfs. auch vom Nutzer, konfigurierbar, insbesondere erweiterbar. Es ist denkbar, zur Vereinfachung und/oder Beschleunigung des Identifikationsprozesses geometrische Beschreibungen und/oder objektspezifische Parameter für die jeweiligen Objekte einer solchen Liste systemseitig bereitzustellen.

In fortgeführter Erweiterung dieser Ausführungsform des erfindungsgemäßen Verfahrens wird ein erkanntes Objekt, sei es aus der voranstehend genannten Liste oder weil es sich bspw. gegenüber dem unberührten (d. h. fabrikneuen) Innenraum des Fahrzeugs abhebt, in dem in der VR-Brille dargestellten Bild kenntlich gemacht, vorzugsweise farblich hervorgehoben.

Es ist denkbar, dass die voranstehenden Verfahrensschritte in einem vorbestimmten Zeitintervall, bspw. alle 10, 30 oder 60 Minuten, wiederholt werden, oder auf externe Anfrage hin initiiert werden. Ein sich nicht im oder am Fahrzeug befindlicher Nutzer kann somit in einer von einem externen Server bereitgestellten Innenraumansicht seines Fahrzeugs mittels einer VR-Brille Ausschau nach möglicherweise im Fahrzeuginnenraum verbliebenen Gegenständen halten. Bei einer mit Bewegungserfassung ausgestatteten VR-Brille ist ein virtuelles Umsehen im Fahrzeuginnenraum entsprechend einer realen Absuche vor Ort ermöglicht. Das bedeutet, dass der Nutzer mit aufgesetzter VR-Brille bei Drehen seines Kopfes in der Lage ist, virtuell den Fahrzeuginnenraum anzuschauen und nach Objekten abzusuchen.

Ferner wird ein System zur Darstellung von Bildern eines Fahrzeuginnenraums in einer VR-Brille beansprucht, das mindestens eine in einem Fahrzeuginnenraum verbaute Kamera, eine im Fahrzeug vorhandene Kommunikationseinrichtung, einen externen Server, der mit der Kommunikationseinrichtung des Fahrzeugs in kommunikativer Verbindung steht, und eine VR-Brille, die mit dem externen Server in kommunikativer Verbindung steht, umfasst, wobei das System dazu ausgelegt ist, ein voranstehend beschriebenes Verfahren auszuführen.

Unter einer kommunikativen Verbindung ist im Rahmen der vorliegenden Offenbarung eine Verbindung zu verstehen, über welche Daten zwischen den entsprechenden Verbindungsteilnehmern, wie hier bspw. zwischen externem Server und Fahrzeug bzw. zwischen VR-Brille und externem Server übertragen bzw. ausgetauscht werden können.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

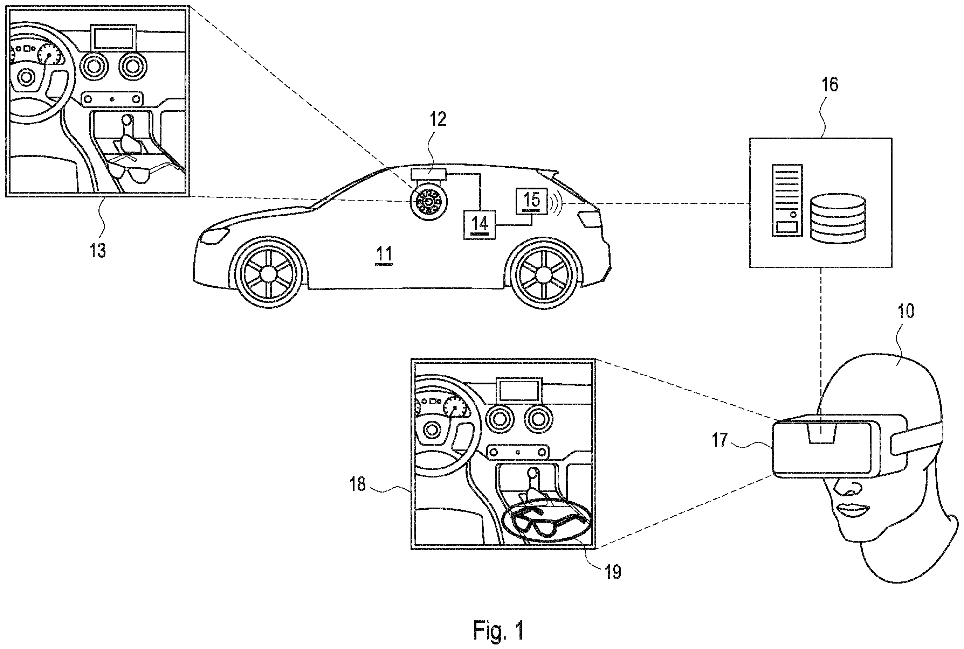

Figur 1 zeigt in schematischer Darstellung das Konzept einer Ausführungsform des erfindungsgemäßen Verfahrens.

In Figur 1 ist in schematischer Darstellung das Konzept einer Ausführungsform des erfindungsgemäßen Verfahrens aufgezeigt. Im Fahrzeuginnenraum eines Fahrzeuges 11 ist eine ggfs. unsichtbar verbaute Kamera 12 vorhanden, die bspw. ein Bild 13 eines vorderen, mittleren Armaturenbereichs des Fahrzeugs 11 erstellt und das Bild 13 bzw. die damit verbundenen Bilddaten einer Recheneinheit 14 übermittelt. Ist die eine Kamera 12 beweglich oder sind mehrere Kameras mit unterschiedlichen Blickwinkeln in dem Fahrzeug 11 verbaut, können Bilder bis zu einer kompletten Erfassung des Fahrzeuginnenraums erstellt werden. Aus diesen Bildern kann durch die Recheneinheit 14 ein fusioniertes Bild zusammengestellt werden. Diese damit verbundenen Bilddaten können durch numerische Verfahren, bspw. ebenfalls ausgeführt auf der Recheneinheit 14, komprimiert werden. Weiterhin werden sie fahrzeugbezogen gekennzeichnet durch eine Kommunikationseinrichtung 15 des Fahrzeugs 11 an einen als Backend fungierenden externen Server 16 mit Massenspeicher übermittelt. Die Übermittlung erfolgt dabei bspw. über ein Drahtlosnetzwerk. Wenn vorher im Fahrzeug nicht geschehen, können die Bilddaten 18 auch auf dem externen Server 16 zu einer kompletten Innenraumansicht des Fahrzeugs 11 fusioniert werden, falls hierzu ausreichend Bilder bzw. Bildansichten vorliegen. Des Weiteren kann auf dem externen Server 16 eine Bearbeitung der Bilddaten 18 durch numerische Verfahren aus dem Bereich eines sogenannten Image Processing erfolgen. Hierzu können auch Methoden einer sogenannten Object Recognition - der Erfassung von Objekten in Bildern - hinzugezogen werden, wodurch systemseitig Objekte, bspw. eine Sonnenbrille, aufgesucht und für eine hervorgehobene Darstellung 19 in den Bilddaten 18 verwendet werden können. Schließlich kann ein Nutzer 10 sich die Bilddaten 18 mittels einer VR-Brille 17, wobei die VR-Brille 17 die Bilddaten 18 von dem externen Server 16 erhält, betrachten. Hierzu muss sich der Nutzer 10 nicht in einer Nähe zu dem Fahrzeug 11 befinden, kann also bspw. von Zuhause aus nachsehen, ob er einen ggfs. vermissten Gegenstand, bspw. seine Sonnenbrille, im Fahrzeug 11 vergessen hat. Durch die hervorgehobene Darstellung 19 wird dies ggfs. erleichtert.

## Patentansprüche

1. Verfahren zur Darstellung mindestens eines Bildes (13) eines Innenraums eines Fahrzeugs, wobei mittels mindestens einer im Fahrzeug vorhandenen Kamera (12) mindestens ein Bild (13) des Fahrzeuginnenraums aufgenommen, fahrzeugbezogen gekennzeichnete Bilddaten des mindestens einen Bildes (13) an einen externen Server (16) übermittelt werden, wobei auf die auf dem externen Server (16) gespeicherten Bilddaten Methoden zur Erkennung mindestens eines Objekts angewendet werden, und wobei einem gegenüber dem externen Server (16) als für die fahrzeugbezogen gekennzeichneten Bilddaten autorisierten Nutzer (10) Zugriff auf die Bilddaten gewährt, **dadurch gekennzeichnet, dass** die Bilddaten (18,19) dem Nutzer (10) mittels einer VR-Brille (17) angezeigt werden und dass die Methoden zur Erkennung des mindestens einen Objektes numerische Methoden sind.

2. Verfahren nach Anspruch 1, bei dem das mindestens eine Bild (13) des Fahrzeuginnenraums durch mindestens eine in dem Fahrzeug (11) unsichtbar verbaute Kamera aufgenommen wird.

3. Verfahren nach einem der voranstehenden Ansprüche, bei dem als Objektiv der mindestens einen Kamera (12) ein Fischaugenobjektiv gewählt wird.

4. Verfahren nach einem der voranstehenden Ansprüche, bei dem von mindestens an zwei Positionen innerhalb des Fahrzeugs (11) vorhandenen Kameras (12) entsprechend mindestens zwei Bilder aufgenommen werden und aus den mindestens zwei aufgenommenen Bildern ein fusioniertes Bild des Fahrzeuginnenraums errechnet wird.

5. Verfahren nach Anspruch 4, bei dem das fusionierte Bild von einer im Fahrzeug (11) vorhandenen Recheneinheit (14) erstellt wird.

6. Verfahren nach einem der voranstehenden Ansprüche, bei dem die von dem Fahrzeuginnenraum erhaltenen Bilddaten komprimiert an den externen Server (16) übermittelt werden.

7. Verfahren nach einem der voranstehenden Ansprüche, bei dem das mindestens eine zu erkennende Objekt aus folgender Liste gewählt wird: Geldbörse, Schlüsselbund, Smart-Gerät, Sonnenbrille, Handtasche, Handschuhe.

8. Verfahren nach Anspruch 7, bei dem ein erkanntes Objekt (19) in dem in der VR-Brille (17) dargestellten Bild farblich hervorgehoben wird.

9. System, das mindestens eine in einem Fahrzeuginnenraum verbaute Kamera (12), eine im Fahrzeug vorhandene Kommunikationseinrichtung (15), einen externen Server (16), der mit der Kommunikationseinrichtung (15) des Fahrzeugs in Verbindung steht und über numerische Methoden zur Erkennung mindestens eines Objektes in den gespeicherten Bilddaten verfügt, und eine VR-Brille (17), die mit dem externen Server (16) in Verbindung steht, umfasst, wobei das System dazu ausgelegt ist, ein Verfahren nach einem der voranstehenden Ansprüche auszuführen.

## Claims

1. Method for depicting at least one image (13) of an interior of a vehicle, wherein at least one camera (12) present in the vehicle is used to record at least one image (13) of the vehicle interior, image data of the at least one image (13) that are tagged in reference to the vehicle are transmitted to an external server (16), wherein methods for detecting at least one object are applied to the image data stored on the external server (16) and a user (10) who is authorised on the external server (16) for the image data tagged in reference to the vehicle is granted access to the image data, **characterised in that** the image data (18, 19) are displayed to the user (10) by means of a VR headset (17) and **in that** the methods for detecting the at least one object are numerical methods.

2. Method according to claim 1, in which the at least one image (13) of the vehicle interior is recorded by at least one camera invisibly installed in the vehicle (11).

3. Method according to any one of the preceding claims, in which a fisheye lens is selected as the lens of the at least one camera (12).

4. Method according to any one of the preceding claims, in which at least two images are recorded from cameras (12) present at at least two positions inside the vehicle (11) and a merged image of the vehicle interior is calculated from the at least two recorded images.

5. A method according to claim 4, in which the merged image is created by a processing unit (14) present in the vehicle (11).

6. Method according to any of the preceding claims, in which the image data obtained from the vehicle interior is transferred in compressed form to the external server (16).

7. Method according to any of the preceding claims, in which the at least one object to be detected is selected from the following list: wallet, keyring, smart device, sunglasses, handbag, gloves.

8. Method according to claim 7, in which an identified object (19) is highlighted in colour in the image displayed in the VR headset (17).

9. System, that comprises at least one camera (12) installed in a vehicle interior, a communication device (15) present in the vehicle, an external server (16) that is connected to the communication device (15) of the vehicle and has numerical methods for detecting at least one object in the stored image data, a VR headset(17) which is connected with the external server (16), wherein the system is designed to implement a method according to any one of the preceding claims.

## Revendications

1. Procédé de représentation d'au moins une image (13) d'un habitacle d'un véhicule, dans lequel au moyen d'au moins une caméra (12) présente dans le véhicule, au moins une image (13) de l'habitacle de véhicule est acquise, des données d'image caractérisées et liées au véhicule, de l'au moins une image (13) sont transmises à un serveur externe (16), dans lequel des méthodes pour la reconnaissance d'au moins un objet sont appliquées sur les données d'image enregistrées sur le serveur externe (16), et dans lequel un accès aux données d'image est accordé par rapport au serveur externe (16) en tant qu'utilisateur (10) autorisé pour les données d'image caractérisées et liées au véhicule, **caractérisé en ce que** les données d'image (18, 19) sont affichées à l'utilisateur (10) au moyen d'un casque de réalité virtuelle (17) et que les méthodes pour la reconnaissance d'au moins un objet sont des méthodes numériques.

2. Procédé selon la revendication 1, dans lequel l'au moins une image (13) de l'habitacle de véhicule est acquise par au moins une caméra installée de manière invisible dans le véhicule (11).

3. Procédé selon l'une des revendications précédentes, dans lequel comme objectif d'au moins une caméra (12) un objectif œil de poisson est choisi.

4. Procédé selon l'une des revendications précédentes, dans lequel au moins deux images sont acquises en conséquence par des caméras (12) présentes au moins au niveau de deux positions dans le véhicule (11) et une image fusionnée de l'habitacle de véhicule est calculée à partir des au moins deux images acquises.

5. Procédé selon la revendication 4, dans lequel l'image fusionnée est établie par une unité de calcul (14) présente dans le véhicule (11).

6. Procédé selon l'une des revendications précédentes, dans lequel les données d'image obtenues par l'habitacle de véhicule sont transmises comprimées au serveur externe (16).

7. Procédé selon l'une des revendications précédentes, dans lequel l'au moins un objet à reconnaître est choisi à partir de la liste suivante : porte-monnaie, trousseau de clés, appareil smart, lunette de soleil, sac à main, gant.

8. Procédé selon la revendication 7, dans lequel un objet reconnu (19) est mis en relief en couleur dans l'image représentée dans le casque de réalité virtuelle (17).

9. Système qui comporte au moins une caméra (12) installée dans un habitacle de véhicule, un dispositif de communication (15) présent dans le véhicule, un serveur externe (16) qui est en liaison avec le dispositif de communication (15) du véhicule et dispose de méthodes numériques pour la reconnaissance d'au moins un objet dans les données d'image enregistrées, et un casque de réalité virtuelle (17) qui est en liaison avec le serveur externe (16), dans lequel le système est conçu afin de réaliser un procédé selon l'une des revendications précédentes.
